# EUROPÄISCHE PATENTSCHRIFT

(11) **EP 3 400 776 B1**
(45) Veröffentlichungstag und Bekanntmachung des Hinweises auf die Patenterteilung: **18.11.2020**
(21) Anmeldenummer: 17000792.6
(22) Anmeldetag: 09.05.2017
(51) Int. Cl.: A01D 34/416

(54) **FADENMÄHKOPF FÜR EINEN FREISCHNEIDER**
STRING MOWER HEAD FOR A STRING MOWER
TÊTE FAUCHEUSE POUR UNE DÉBROUSSAILLEUSE

(43) Veröffentlichungstag der Anmeldung: 14.11.2018
(73) Patentinhaber: Andreas Stihl AG & Co. KG, 71336 Waiblingen (DE)
(72) Erfinder: Lang, Sven, 73666 Baltmannsweiler (DE); Günther, David, 71394 Kernen i.R. (DE)
(74) Vertreter: Reinhardt, Annette

(56) Entgegenhaltungen:
- EP-A1- 1 967 059
- DE-A1-102014 006 057
- US-A1- 2004 237 315
- US-B1- 6 519 857

## Beschreibung

Die Erfindung betrifft einen Fadenmähkopf für einen Freischneider der im Oberbegriff des Anspruchs 1 angegebenen Gattung.

Aus der DE 10 2014 006 057 A1 ist ein Fadenmähkopf für einen Freischneider bekannt, der einen Grundkörper besitzt, in den von der Außenseite des Fadenmähkopfes von gegenüberliegenden Seiten zwei Schneidfäden eingeschoben werden können. Die freien Enden der Schneidfäden ragen in einen zur Unterseite des Fadenmähkopfes hin offenen Innenraum. Im Innenraum ist ein Abschirmelement angeordnet, wobei der in dem Innenraum verlaufende Abschnitt des Schneidfadens bezogen auf die Drehrichtung im Windschatten des Abschirmelementes angeordnet ist. Zur Entnahme der Schneidfäden sind die innenliegenden freien Enden der Schneidfäden vom Bediener zu greifen und nach innen durchzuziehen.

Es hat sich gezeigt, dass aufgrund der erschwerten Zugänglichkeit der freien Enden der Schneidfäden eine Entnahme der Schneidfäden nur schwer möglich ist. Besonders unter Verwendung von Arbeitshandschuhen ist eine Demontage der Schneidfäden erschwert.

Der Erfindung liegt die Aufgabe zugrunde, einen Fadenmähkopf für einen Freischneider der gattungsgemäßen Art zu schaffen, der eine einfache und schnelle Entnahme des mindestens einen Schneidfadens ermöglicht.

Diese Aufgabe wird durch einen Fadenmähkopf mit den Merkmalen des Anspruchs 1 gelöst.

Es ist vorgesehen, dass sich der Schneidfaden von einer Außenseite des Grundkörpers durch eine Fadenöffhung bis in einen zur Umgebung offenen Innenbereich des Fadenmähkopfes erstreckt. Am Fadenmähkopf ist ein Anschlag für den Schneidfaden angeordnet. Der Anschlag begrenzt in einer ersten Lage des Schneidfadens die Länge eines in den Innenbereich einschiebbaren Fadenabschnitts des Schneidfadens auf eine Einstecklänge. Im Innenbereich des Fadenmähkopfes ist mindestens ein Ablenkelement so angeordnet, dass der Schneidfaden von seiner ersten Lage ohne eine Verschiebung des Schneidfadens in seine Längsrichtung in eine zweite Lage umgesetzt werden kann. Der Schneidfaden liegt in seiner zweiten Lage an dem Ablenkelement an. Der Anschlag begrenzt dabei die Länge des in den Innenbereich einschiebbaren Fadenabschnitts nicht. Das Umsetzen des Schneidfadens von seiner ersten Lage in seine zweite Lage ist durch Biegen des eingeschobenen Fadenabschnittes um die Öffnung möglich.

In der zweiten Lage kann der Schneidfaden auf einfache Weise durch die Fadenöffhung zum Innenbereich hin vollständig durchgeschoben oder durchgezogen werden. Der Schneidfaden wird dabei mittels des Ablenkelementes an dem Anschlag vorbeigeführt. Dadurch kann der Bediener auf einfache Weise den Schneidfaden vom Mähkopf entnehmen. Die erste Lage ist dabei vorteilhaft die Lage, die der Schneidfaden beim Einschieben des Schneidfadens in den Mähkopf einnimmt. Vorteilhaft befindet sich der Schneidfaden während des Betriebs des Mähkopfes ebenso in seiner ersten Lage. Die zweite Lage nimmt der Schneidfaden vorteilhaft nur dann ein, wenn im Innenbereich eine Kraft in Umfangsrichtung oder axialer Richtung der Drehachse auf den im Innenbereich angeordneten Fadenabschnitt ausgeübt wird.

Vorteilhaft besitzt der Schneidfaden an seinen Enden jeweils eine Stirnseite, wobei die Stirnseite etwa in einer Ebene liegt, die senkrecht zur Längsrichtung des Schneidfadens an den jeweiligen Enden steht. Wird der Schneidfaden in den Innenbereich des

Fadenmähkopfes eingeschoben, so nimmt dieser seine erste Lage ein. Vorteilhaft steht der Schneidfaden in seiner ersten Lage mit seiner Stirnseite mit dem Anschlag in Kontakt. Der Anschlag kann vorteilhaft als eine ebene oder gewölbte Wand ausgebildet sein. Es kann auch vorgesehen sein, dass der Anschlag durch eine sich verengende Nut gebildet ist, in die der Schneidfaden eingeführt werden kann, bis der Abstand zwischen den Nutwänden kleiner als die Breite des Schneidfadens ist und der Schneidfaden zwischen den seitlichen Nutwänden eingeklemmt wird. Vorteilhaft ist der Anschlag etwa senkrecht zur Längsrichtung des Schneidfadens ausgerichtet. Auch eine geneigte Anordnung des Anschlags kann jedoch vorteilhaft sein. Der Anschlag übt auf den Schneidfaden vorteilhaft eine Kraft in Richtung der Längsrichtung des Schneidfadens aus. Wird beim Einschieben des Schneidfadens in den Mähkopf die Stirnseite des Schneidfadens gegen den Anschlag gedrückt, verformt sich der Schneidfaden aufgrund seiner hohen Eigensteifigkeit nur geringfügig, vorteilhaft verformt sich der Schneidfaden nicht. Demnach weicht der Schneidfaden durch bloßes Einschieben des Schneidfadens in den Mähkopf dem Anschlag nicht selbstständig mittels Verformung aus. In der ersten Lage kann der Schneidfaden nicht vollständig durch die Fadenöffnung in bzw. durch den Innenbereich durchgeschoben oder durchgezogen werden. Der Schneidfaden kann demnach in der ersten Lage nicht aus dem Fadenmähkopf entnommen werden. Hierzu muss der Schneidfaden vom Bediener verformt werden. Dies kann auf einfache Weise durch Umsetzen des Schneidfadens in seine zweite Lage erfolgen. In der zweiten Lage kann der Schneidfaden am Anschlag vorbeigeschoben und/oder vorbeigezogen werden.

Vorteilhaft ist in der ersten Lage des Schneidfadens ein inneres Ende des Schneidfadens in einer ersten Richtung ausgerichtet. Der Anschlag liegt in Verlängerung des inneren Endes des Schneidfadens in erster Richtung. In der zweiten Lage des Schneidfadens ist das innere Ende des Schneidfadens vorteilhaft in einer zweiten Richtung ausgerichtet, wobei der Anschlag außerhalb der Verlängerung des inneren Endes des Schneidfadens in zweiter Richtung liegt. In der ersten Lage schneidet die Verlängerung des inneren Endes des Schneidfadens den Anschlag. In der zweiten Lage existiert kein Schnittpunkt der Verlängerung des inneren Endes des Schneidfadens mit dem Anschlag.

Es ist vorgesehen, dass das Ablenkelement in Blickrichtung der Drehachse gegenüber dem Schneidfaden quer zur ersten Richtung versetzt ist. Dadurch kann der Schneidfaden auf einfache Weise quer zu seiner ersten Richtung versetzt werden und in seine zweite Lage gebracht werden. Der Schneidfaden kann ohne Verschieben des Schneidfadens in seiner Längsrichtung von der ersten Lage in die zweite Lage versetzt werden. Der Bediener kann durch ein einfaches Schieben des Schneidfadens quer zur ersten Richtung des Schneidfadens oder durch Biegen des innenliegenden Fadenabschnittes um die Fadenöffhung den Schneidfaden in seine zweite Position bringen. Ein derartiges Verschieben oder Biegen des Fadens ist auch bei schlechter Zugänglichkeit des Schneidfadens, beispielsweise aufgrund der konstruktiven Gestaltung des Mähkopfes oder aufgrund der im Betrieb entstehenden Verschmutzungen des Innenbereichs, möglich.

Vorteilhaft besitzt die Fadenöffhung am Innenbereich des Fadenmähkopfes eine untere Öffhungskante, und das Ablenkelement besitzt eine Auflage. Die Auflage entspricht dem Bereich des Ablenkelementes, welcher mit dem umgesetzten Fadenabschnitt in Wechselwirkung steht. Die Auflage nimmt zumindest die in axialer Richtung der Drehachse wirkenden Rückstellkräfte des elastisch gebogenen Fadenabschnittes auf. Die Fadenöffhung besitzt eine untere Öffnungskante und eine obere Öffnungskante, wobei die untere Öffhungskante gemessen in Richtung der Drehachse näher an der Unterseite des Mähkopfes liegt als die obere Öffhungskante. Vorteilhaft liegt der Schneidfaden mit dem Fadenabschnitt in der zweiten Lage sowohl an der unteren Öffnungskante als auch an der Auflage an. Vorteilhaft ist der in Richtung der Drehachse gemessene Abstand zwischen der Auflage und der unteren Öffnungskante geringer als eine Höhe der Fadenöffhung, insbesondere geringer als der Durchmesser des Schneidfadens. Um den Schneidfaden von seiner ersten Lage in seine zweite Lage umzusetzen, ist vorteilhaft nur eine geringe Verschiebung und/oder Biegung in axialer Richtung der Drehachse nötig, die leicht vom Bediener ausgeübt werden kann. Die Höhe der Fadenöffnung entspricht dem in Richtung der Drehachse gemessenen Abstand zwischen der unteren Öffhungskante und der oberen Öffhungskante. Liegt der Schneidfaden an der Auflage an, so ist das innere Ende des Schneidfadens in einer zweiten Richtung zur Ebene der Unterseite des Grundkörpers ausgerichtet. Vorteilhaft schließt die Stirnseite des Schneidfadens mit der Unterseite einen Winkel größer gleich 90° in der ersten Lage und einen Winkel kleiner 90° in der zweiten Lage ein. In der zweiten Lage weist die Stirnseite demnach zumindest teilweise zur Unterseite hin. Die Ebene der Unterseite des Grundkörpers ist dabei eine Ebene, in der die Unterseite des Grundkörpers liegt. Wird der Fadenmähkopf auf eine ebene, horizontale Fläche aufgelegt, so entspricht die Ebene der Unterseite der ebenen horizontalen Fläche. Die Ebene der Unterseite steht vorteilhaft senkrecht zur Drehachse des Fadenmähkopfes.

Die Auslenkung des Schneidfadens in axialer Richtung der Drehachse ist insbesondere kleiner als die Auslenkung in Umfangsrichtung zur Drehachse. Vorteilhaft ist vorgesehen, dass die erste Richtung und die zweite Richtung des Schneidfadens in Blickrichtung der Drehachse des Fadenmähkopfes einen Winkel von mindestens 5°, insbesondere von mindestens 10°, vorteilhaft von mindestens 20°, vorteilhaft von mindestens 40° miteinander einschließen. Dadurch kann der Schneidfaden in seiner zweiten Lage in Blickrichtung der Drehachse gesehen seitlich an dem Anschlag vorbeigeführt werden. Vorteilhaft ist vorgesehen, dass die erste Richtung und die zweite Richtung des Schneidfadens in einer Draufsicht auf eine die Drehachse enthaltende und parallel zur Längsachse der Fadenöffnung verlaufende Längsebene einen Winkel von mindestens 5°, insbesondere von mindestens 10°, insbesondere von mindestens 20°, vorteilhaft von mindestens 40° einschließen. Das innere Ende des Schneidfadens ist in vorteilhafter Gestaltung in der zweiten Lage gegenüber der ersten Lage sowohl in Richtung der Drehachse als auch in Umfangsrichtung zur Drehachse versetzt angeordnet.

Vorteilhaft weist die Auflage des Ablenkelements eine Sicherungskontur zur Sicherung des Schneidfadens in der zweiten Lage auf. Die Sicherungskontur dient zur Abstützung, insbesondere zur Verrastung, des Schneidfadens quer zur zweiten Richtung. Die Sicherungskontur nimmt die in Umfangsrichtung zur Drehachse wirkenden Rückstellkräfte des elastisch gebogenen Fadenabschnittes auf. Die Sicherungskontur kann insbesondere als eine Nase ausgebildet sein. Wird der Schneidfaden von seiner ersten Lage in seine zweite Lage umgesetzt, so neigt dieser aufgrund seiner Eigensteifigkeit zur Rückfederung in seine erste Lage. Mittels der Sicherungskontur kann der Schneidfaden entgegen seiner Eigensteifigkeit in seiner zweiten Lage gehalten werden. Dies ermöglicht dem Bediener, den Schneidfaden von der ersten Lage in die zweite Lage umzusetzen, und den Schneidfaden danach, ohne ihn auf dem Ablenkelement aktiv in seiner zweiten Lage halten zu müssen, auf einfache Weise durch die Fadenöffhung zum Innenbereich hin vollständig durchzuschieben oder durchzuziehen.

Es kann vorgesehen sein, dass der Abstand zwischen der Fadenöffnung und dem Anschlag höchstens dem 15fachen, vorteilhaft höchstens dem 10fachen Durchmesser, insbesondere dem 8fachen Durchmesser des Schneidfadens entspricht. Dadurch ist die in dem Innenbereich des Fadenmähkopfes geführte Länge des Schneidfadens vergleichsweise klein. Vorteilhaft entspricht der Abstand zwischen der Fadenöffnung und dem Anschlag mindestens dem 3fachen, insbesondere mindestens dem 5fachen Durchmesser des Schneidfadens. Mit größer werdendem Abstand zwischen der Fadenöffnung und dem Anschlag lässt sich ein längerer Fadenabschnitt in den Innenbereich einschieben und aufgrund der vergrößerten Länge einfacher von der ersten Lage in die zweite Lage umsetzen.

Vorteilhaft ist im Innenbereich des Fadenmähkopfes in Umfangsrichtung der Drehachse neben dem Schneidfaden eine Abschirmwand angeordnet. Vorteilhaft erstreckt sich die Abschirmwand bezogen auf die Drehachse in etwa in radiale Richtung von der Fadenöffhung bis zum Anschlag. Es hat sich gezeigt, dass durch eine Abschirmwand, in deren Windschatten der Schneidfaden verläuft, die Verschmutzungsneigung des Fadenmähkopfes deutlich verringert werden kann. Die Abschirmwand leitet Verschmutzungen, wie beispielsweise Schnittgut oder dgl. an dem im Innenbereich angeordneten Fadenabschnitt vorbei und vermeidet weitgehend, dass sich Verschmutzungen im Bereich des Schneidfadens im Innenbereich anlagern können. Der Schneidfaden ist dabei vorteilhaft so zur Abschirmwand angeordnet, dass mindestens die Hälfte der Länge des im Innenbereich verlaufenden Fadenabschnitts benachbart zu der Abschirmwand verlaufen. Der Abstand zwischen dem Schneidfaden und der Abschirmwand beträgt dabei vorteilhaft maximal das 2fache des Durchmessers des Schneidfadens.

Es kann vorgesehen sein, dass der Grundkörper eine im Betrieb dem Boden zugewandte Unterseite besitzt, wobei der Innenbereich an der Unterseite des Grundkörpers zur Umgebung hin offen ist. Vorteilhaft ist der in Richtung der Drehachse gemessene Abstand zwischen der Unterseite und dem inneren Ende des Schneidfadens in erster Lage größer als in zweiter Lage.

Vorteilhaft ist das Ablenkelement als Rampe ausgebildet. Das Ablenkelement kann in alternativer Gestaltung insbesondere durch einen Stift gebildet sein. Andere Ausgestaltungen des Ablenkelementes können ebenfalls von Vorteil sein.

Ausführungsbeispiele der Erfindung werden im Folgenden anhand der Zeichnung erläutert. Es zeigen:
- Fig. 1: eine schematische Darstellung eines von einem Bediener gehaltenen Freischneiders,
- Fig. 2: eine Seitenansicht auf den Fadenmähkopf des Freischneiders aus Fig. 1,
- Fig. 3: eine Ansicht von unten auf den Fadenmähkopf des Freischneiders in Richtung des Pfeils III aus Fig. 2 mit Schneidfäden in erster Lage,
- Fig. 4: eine Ansicht von unten auf den Fadenmähkopf des Freischneiders in Richtung des Pfeils III aus Fig. 2 mit Schneidfäden in zweiter Lage,
- Fig. 5 und 6: vergrößerte perspektivische Darstellungen des Grundkörpers aus Fig. 2,
- Fig. 7: eine Ansicht von oben auf den Fadenmähkopf des Freischneiders in Richtung des Pfeils VII in Fig. 2,
- Fig. 8: eine ausschnittsweise Schnittdarstellung entlang der Linie VIII-VIII in Fig. 7 mit einem schematisch dargestellten Schneidfaden in erster Lage,
- Fig. 9: eine ausschnittsweise perspektivische Schnittdarstellung entlang der Linie VIII-VIII in Fig. 7 mit einem Schneidfaden in erster Lage,
- Fig. 10: eine ausschnittsweise Schnittdarstellung entlang der Linie VIII-VIII in Fig. 7 mit einem schematisch dargestellten Schneidfaden in zweiter Lage,
- Fig. 11: eine ausschnittsweise perspektivische Schnittdarstellung entlang der Linie VIII-VIII in Fig. 7 mit einem Schneidfaden in zweiter Lage.

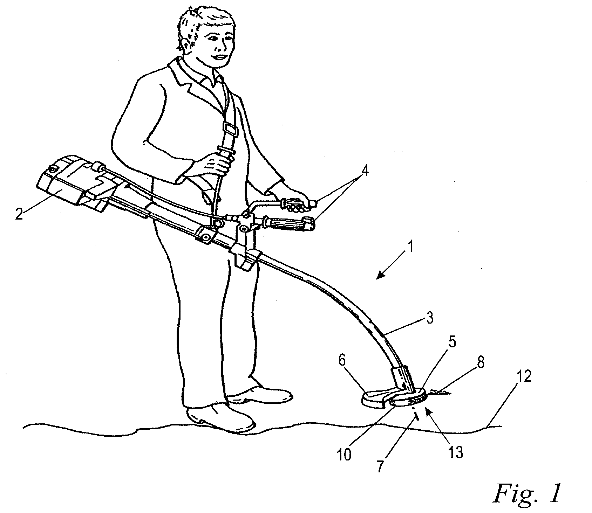

Fig. 1 zeigt schematisch einen Freischneider 1, der von einem Bediener gehalten ist. Der Freischneider 1 besitzt ein Gehäuse 2, in dem ein nicht gezeigter Antriebsmotor angeordnet ist. Der Freischneider 1 besitzt einen Schaft 3, der mit einem Ende am Gehäuse 2 angeordnet ist und dessen anderes Ende einen Fadenmähkopf 5 trägt. Durch den Schaft 3 ragt eine nicht gezeigte, von dem im Gehäuse 2 angeordneten Antriebsmotor angetriebene Antriebswelle, die den Fadenmähkopf 5 um eine Drehachse 7 rotierend antreibt. Der Antriebsmotor kann ein Verbrennungsmotor oder ein Elektromotor sein. Es kann auch vorgesehen sein, dass der Antriebsmotor an dem den Fadenmähkopf 5 tragenden Ende des Schafts 3 angeordnet ist. Dies ist insbesondere vorteilhaft, wenn der Antriebsmotor ein Elektromotor ist. Der Fadenmähkopf 5 ist an der im Betrieb dem Bediener zugewandten Seite von einer Schutzhaube 6 abgedeckt. Der Fadenmähkopf 5 besitzt mindestens einen Schneidfaden 8, der zum Schneiden von Schnittgut wie Gras, Gestrüpp oder dgl. dient. Der Fadenmähkopf 5 umfasst einen Grundkörper 10. Am Grundkörper 10 ist eine im Betrieb dem Boden 12 zugewandte Unterseite 13 ausgebildet, die an der dem Schaft 3 abgewandten Seite des Fadenmähkopfes 5 angeordnet ist. Zum Führen des Freischneiders 1 im Betrieb sind Handgriffe 4 vorgesehen, die im Ausführungsbeispiel an einem Grifflenker angeordnet sind, der am Schaft 3 befestigt ist. Die vom Bediener zwingend zu tragende Schutzkleidung für den Betrieb eines Freischneiders ist in der vereinfachten Darstellung der Fig. 1 nicht gezeigt.

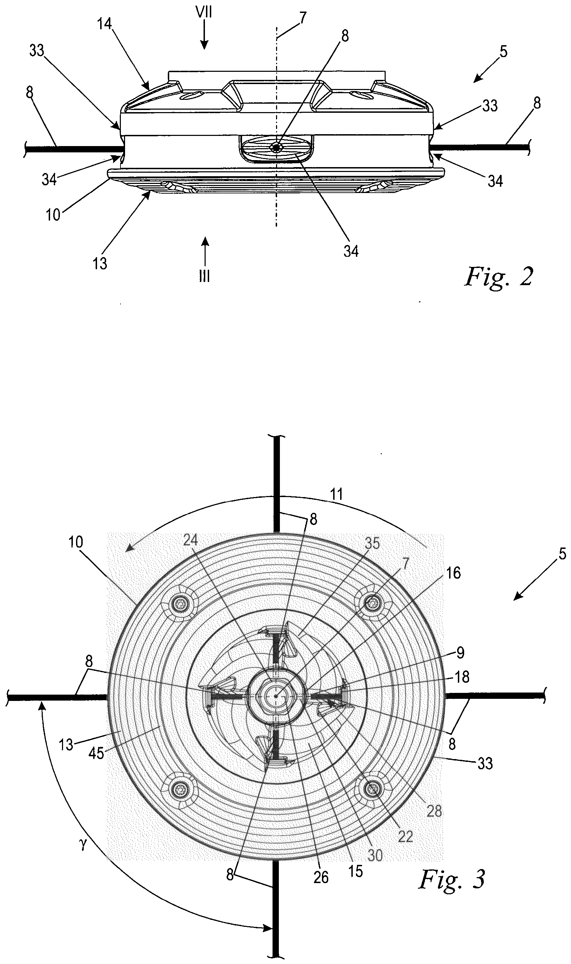

Fig. 2 zeigt den Fadenmähkopf 5 in einer Seitenansicht, wobei in Blickrichtung die Unterseite 13 des Grundkörpers 10 nach unten gerichtet ist. Der Grundkörper 10 besitzt eine Oberseite 14, die von der Unterseite 13 weg gerichtet ist. Die Oberseite 14 und die Unterseite 13 sind über eine Außenseite 33 des Fadenmähkopfs 5, die im Ausführungsbeispiel im Wesentlichen zylindrisch zur Drehachse 7 ausgebildet ist, verbunden. Der Fadenmähkopf 5 enthält Öffnungen 34, die sich von der Außenseite 33 in den Grundkörper 10 erstrecken. Der Fadenmähkopf 5 umfasst im Ausführungsbeispiel vier Schneidfäden 8, die ausgehend von der Außenseite 33 durch jeweils eine Öffnung 34 in den Grundkörper 10 eingesteckt sind.

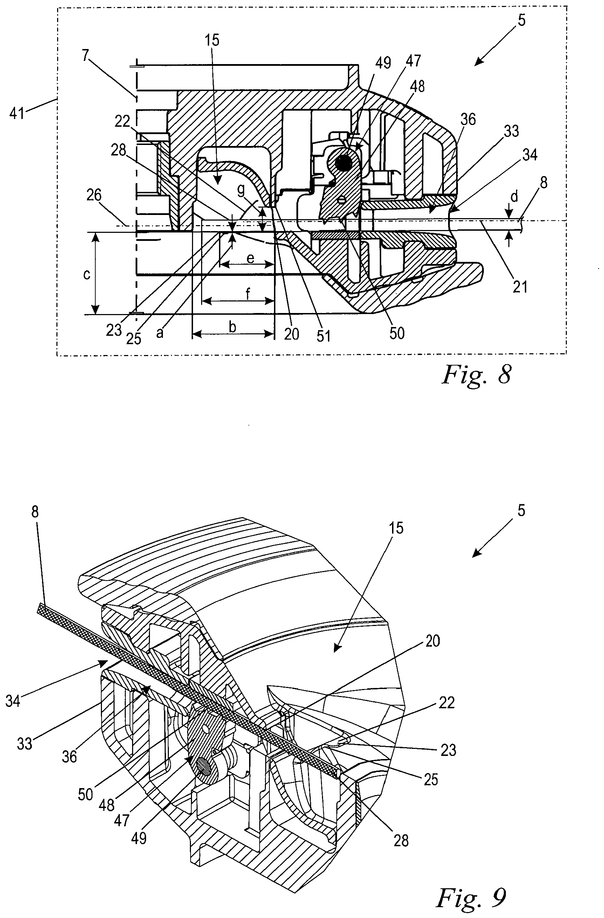

In Fig. 3 ist gezeigt, dass die vier Schneidfäden 8 von der Außenseite 33 in den Grundkörper 10 eingesteckt sind und aus den Fadenöffnungen 18 in einen Innenbereich 15 des Fadenmähkopfes 5 ragen. Der Innenbereich 15 ist zur Oberseite 14 (Fig. 2) von einer Dachfläche 35 begrenzt. Der Innenbereich 15 ist zur Unterseite 13 hin offen. Der Grundkörper 10 besitzt einen Ringabschnitt 45, der die Außenseite 33 von dem Innenbereich 15 trennt. Der Grundkörper 10 enthält Fadenkanäle 36 (Fig. 8 bis 11), wobei die Fadenkanäle 36 sich von den Öffnungen 34 an der Außenseite 33 bis zu den Fadenöffhungen 18 im Innenbereich 15 erstrecken. Die Fadenkanäle 36 durchragen den Ringabschnitt 45.

Fig. 3 zeigt die Schneidfäden 8 in einer ersten Lage 28 für den Betrieb. Nachfolgend wird die Anordnung am Beispiel eines der Schneidfäden 8 beschrieben. Der Schneidfaden 8 besitzt ein radial innenliegendes, freies inneres Ende 9. In der Betriebslage nimmt der Schneidfaden 8 an seinem im Innenbereich 15 liegenden inneren Ende 9 eine erste Lage 28 ein. In dieser ersten Lage 28 zeigt das innere Ende 9 des Schneidfadens 8 in eine erste Richtung 26. Das innere Ende 9 des Schneidfadens 8 kann in der ersten Richtung 26 zu einer gedachten Verlängerung 30 verlängert werden. Im Ausführungsbeispiel besitzt der Fadenmähkopf 5 vier Schneidfäden 8. Die Schneidfäden 8 besitzen zueinander insbesondere jeweils einen gleichen Winkelabstand γ, der im Ausführungsbeispiel 90° beträgt. Der Winkelabstand γ ist dabei zwischen den Öffnungen 34 der Außenseite 33 um die Drehachse 7 gemessen. Im Ausführungsbeispiel sind entsprechend dem Winkelabstand γ auch jeweils die inneren Enden der Schneidfäden 8 zueinander geneigt. Auch ein anderer Winkelabstand γ und/oder eine andere Anzahl von Schneidfäden 8 kann vorteilhaft sein. Die inneren Enden 9 der Schneidfäden 8 verlaufen in der ersten Lage 28 der Schneidfäden 8 im Innenbereich 15 vorteilhaft radial zur Drehachse 7. Im Ausführungsbeispiel schneiden sich in der ersten Lage 28 der Schneidfäden 8 die Längsachsen an den inneren Enden 9 von zwei Schneidfäden 8, insbesondere von vier Schneidfäden 8, bevorzugt aller Schneidfäden 8.

Wie Fig. 3 auch zeigt, besitzt der Grundkörper 10 eine Nabe 24, die im Innenbereich 15 koaxial zur Drehachse 7 angeordnet ist. Die Nabe 24 dient zur Lagerung des Fadenmähkopfes 5 auf einer Antriebswelle des Freischneiders 1. Die Antriebswelle des Freischneiders 1 treibt den Fadenmähkopf 5 um die Drehachse 7 in einer Drehrichtung 11 rotierend an. Die gedachte Verlängerung 30 ragt zur Nabe 24.

In Fig. 3 ist gezeigt, dass an der Nabe 24 jeweils ein Anschlag 16 für jeden Schneidfaden 8 ausgebildet ist. Der Anschlag 16 liegt in der ersten Lage 28 in der gedachten Verlängerung 30 des Schneidfadens 8. Der Schneidfaden 8 besitzt an seinem zum Innenbereich 15 hin gerichteten inneren Ende 9 eine Stirnseite 37. Die Stirnseite 37 liegt in einer Ebene, die senkrecht zur Längsrichtung des Schneidfadens 8 an seinem inneren Ende 9 ausgerichtet ist. In einer vorteilhaften Ausführung kann die Stirnseite 37 des Schneidfadens 8 auch in einer Ebene liegen, die in einem anderen Winkel zur Längsrichtung des Schneidfadens 8 an dem inneren Ende 9 ausgerichtet ist. Die Stirnseite 37 des Schneidfadens 8 kann auch abgerundet ausgebildet sein. Der Anschlag 16 begrenzt eine Länge f (Fig. 8) eines in den Innenbereich 15 einschiebbaren Fadenabschnitts des Schneidfadens 8 auf eine Einstecklänge b (Fig. 8). Entspricht die Länge f des Fadenabschnitts der Einstecklänge b, liegt die Stirnseite 37 des Schneidfadens 8 an dem Anschlag 16 an.

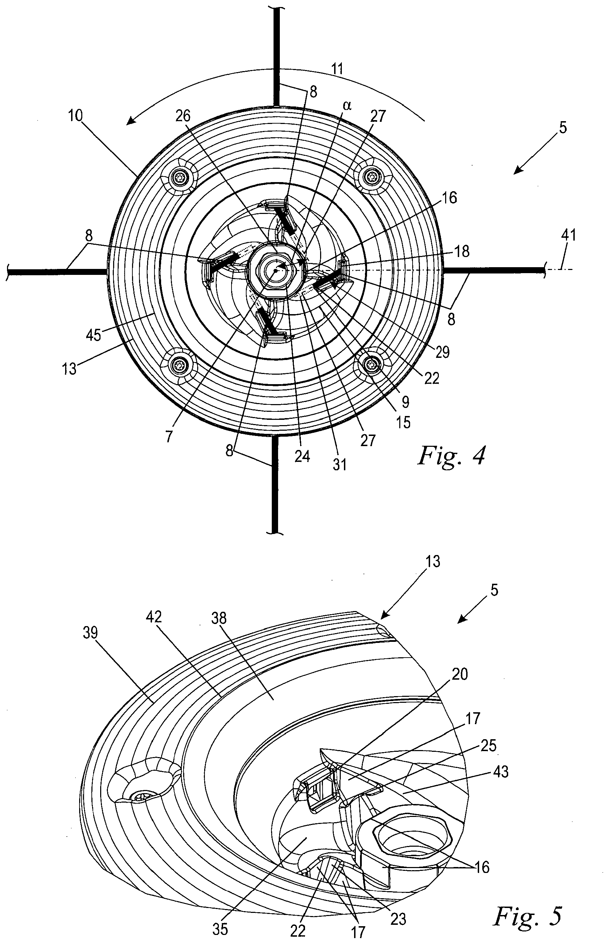

Der Anschlag 16 kann vorteilhaft senkrecht zur ersten Richtung 26 des Schneidfadens 8 ausgerichtet sein. In einer vorteilhaften Ausführung kann der Anschlag 16 auch als eine abgerundete, beispielsweise eine konvexe oder konkave Fläche, oder als unregelmäßige Fläche ausgebildet sein. Der Anschlag 16 ist insbesondere an einer die Drehachse 7 umgebenden Nabe 24 ausgebildet, wobei die Flächen des Anschlags 16 vorteilhaft bearbeitet sind. Dies ist insbesondere in Fig. 5 erkennbar. Es kann auch zweckmäßig sein, dass eine der Fadenöffnung 18 gegenüberliegende Umfangswand den Anschlag 16 bildet. Aufgrund der hohen Eigensteifigkeit des Schneidfadens 8 dient der Anschlag 16 auch, wenn er als abgerundete Fläche ausgebildet ist, einer Begrenzung der Länge f des Fadenabschnitts, da sich der Schneidfaden 8 nur unter sehr hohen Einschubkräften oder Druckkräften verformt und erst dadurch dem Anschlag 16 ausweichen kann. Wird der Schneidfaden 8 vom Bediener gegen den Anschlag 16 geschoben, wirkt dem Schneidfaden 8 über den Anschlag eine senkrecht zum Anschlag 16 gerichtete Normalkraft entgegen. Die oben ausgeführten Ausgestaltungen für den Schneidfaden 8 gelten für alle Schneidfäden 8 des Fadenmähkopfes 5. Der Anschlag 16 dient als Unterstützung bei der Einstellung des Schnittradius. Der Bediener kann gleich lange Schneidfäden 8 jeweils bis zu den Anschlägen 16 einschieben. Die nach außen ragenden freien Enden der Schneidfäden 8 haben dann den gleichen Abstand zur Drehachse 7. Die Schneidfäden 8 müssen jedoch nicht zwingend bis zu den Anschlägen 16 eingeschoben werden.

Wie Fig. 3 zeigt, ist im Innenbereich 15 benachbart zur Fadenöffnung 18 jeweils ein Ablenkelement 22 angeordnet. Das Ablenkelement 22 ist in Draufsicht der Fig. 3 quer zur ersten Richtung 26 gegenüber dem Schneidfaden 8 versetzt angeordnet. Das Ablenkelement 22 liegt bezogen auf die Drehrichtung 11 vorlaufend zum benachbarten Schneidfaden 8. Es kann auch vorteilhaft sein, das Ablenkelement 22 nachlaufend zum Schneidfaden 8 anzuordnen.

Die in Fig. 4 gezeigte Darstellung des Fadenmähkopfes 5 unterscheidet sich von der Darstellung des Fadenmähkopfes 5 in Fig. 3 einzig dadurch, dass der in den Innenbereich 15 ragende Fadenabschnitt auf das Ablenkelement 22 umgesetzt ist. Der Schneidfaden 8 liegt in einer zweiten Lage 29, wobei das innere Ende 9 des Schneidfadens 8 in einer zweiten Richtung 27 ausgerichtet ist. Eine gedachte Verlängerung 31 des Schneidfadens 8 in zweiter Richtung 27 liegt in der zweiten Lage 29 des Schneidfadens 8 außerhalb des Anschlags 16. Um den Schneidfaden 8 vom Fadenmähkopf 5 zu entnehmen, kann der Bediener den Schneidfaden 8 von seiner ersten Lage 28 in seine zweite Lage 29 auf das Ablenkelement 22 umsetzen. Zum Umsetzen des Schneidfadens 8 kann der Bediener den Fadenabschnitt quer zu seiner ersten Richtung 26 in Richtung auf das Ablenkelement 22 biegen. Ein Schieben und/oder Ziehen des Schneidfadens 8 längs zu seiner ersten Richtung 26 ist vorteilhaft nicht notwendig. Um das innere Ende 9 des Schneidfadens 8 auf das Ablenkelement 22 umzusetzen, kann der Bediener den Schneidfaden 8 an einer dem Ablenkelement 22 gegenüberliegenden Seite des Schneidfadens 8 in Richtung des Ablenkelements 22 drücken. Ein Umgreifen des Schneidfadens 8 ist dabei nicht notwendig. Befindet sich der Schneidfaden 8 in seiner zweiten Lage 29, kann der Schneidfaden 8 über das Ablenkelement 22 aus dem Grundkörper 10 geschoben oder gezogen werden. Um den Schneidfaden 8 entnehmen zu können, muss der Schneidfaden 8 zunächst in eine Richtung ausweichen, die ein weiteres Einschieben oder Einziehen des Schneidfadens 8 in den Innenbereich 15 nicht blockiert. Ein mit dem Umsetzen des Schneidfadens 8 von seiner ersten Lage 28 in die zweite Lage 29 zeitgleiches Ziehen des Schneidfadens 8 ist aufgrund des nur schwer greifbaren Fadenabschnittes und der hohen Eigensteifigkeit des Schneidfadens 8 erschwert. Mittels des Ablenkelements 22 wird eine zeitliche Trennung zwischen der Ausweichbewegung gegenüber dem Anschlag 16 und der Entnahmebewegung des Schneidfadens 8 ermöglicht. Das Ablenkelement 22 hält den Schneidfaden 8 in der zweiten Lage 29. Nachdem der Schneidfaden 8 von seiner ersten Lage 28 in die zweite Lage 29 umgesetzt wurde, ist der Schneidfaden 8 nur noch entlang seiner Längsachse aus dem Grundkörper 10 zu schieben und/oder zu ziehen.

Wie Fig. 4 zeigt, schließen die erste Richtung 26 und die zweite Richtung 27 des Schneidfadens 8 in der in Fig. 4 gezeigten Draufsicht auf die Unterseite 13 mit Blickrichtung in Richtung der Drehachse 7 einen Winkel α von mindestens 5° ein. In vorteilhafter Ausführung kann der Winkel α zwischen der ersten Richtung 26 und der zweiten Richtung 27 des Schneidfadens 8 mindestens 10°, insbesondere mindestens 20°, vorteilhaft mindestens 40° betragen. Der Winkel α zwischen der ersten Richtung 26 und der zweiten Richtung 27 ist zum Innenbereich 15 hin geöffnet. In vorteilhafter Ausführung ist der Winkel α zwischen der ersten Richtung 26 und der zweiten Richtung 27 des Schneidfadens 8 so groß gewählt, dass die Verlängerung 31 des umgesetzten inneren Endes 9 des Schneidfadens 8 außerhalb des Anschlages 16, insbesondere außerhalb der Nabe 24 liegt. Die zweite Richtung 27 verläuft tangential zur Drehachse 7, so dass der im Innenbereich 15 befindliche Fadenabschnitt dem im Ausführungsbeispiel an der Nabe 24 ausgebildeten Anschlag 16 seitlich ausweicht.

Wie in Fig. 4 gezeigt, verlaufen im Ausführungsbeispiel die inneren Enden 9 der Schneidfäden 8 in der zweiten Lage 29 im Innenbereich 15 vorteilhaft tangential zur Drehachse 7. Im Ausführungsbeispiel schneiden sich in der zweiten Lage 29 der Schneidfäden 8 zumindest die Längsachsen an den inneren Enden 9 gegenüberliegender Schneidfäden 8 nicht. Insbesondere verlaufen die Längsachsen der Schneidfäden 8 an den inneren Enden 9 räumlich betrachtet windschief zueinander.

In Fig. 5 ist gezeigt, dass an dem Ringabschnitt 45 eine Umfangswand 38 ausgebildet ist. Die Umfangswand 38 verläuft ausgehend vom Ringabschnitt 45 des Fadenmähkopfes 5 in den Innenbereich 15 und geht in die Dachfläche 35 über. Die Umfangswand 38 verläuft konisch zur Drehachse 7 und verjüngt sich in Richtung der Dachfläche 35. Die konische Ausgestaltung der Umfangswand 38 dient dazu, Verschmutzungen wie Gräser oder Ähnliches im Betrieb des Freischneiders 1 mittels entstehender Fliehkräfte an der Umfangswand 38 aus dem Fadenmähkopf 5 auszuleiten. In vorteilhafter Ausführung kann die Umfangswand 38 auch zylindrisch zur Drehachse 7 ausgebildet sein. Auch andere Gestaltungsformen der Umfangswand 38 sind möglich.

Fig. 5 zeigt eine Bodenfläche 39 des Grundkörpers 10, die am Ringabschnitt 45 ausgehend von der Unterseite 13 des Fadenmähkopfes 5 bezogen auf die Drehachse 7 radial nach außen verläuft. Dabei ist der in radialer Richtung der Drehachse 7 gemessene, maximale Abstand zwischen der Drehachse 7 und der Bodenfläche 39 größer als der radiale Abstand zwischen der Drehachse 7 und der Außenseite 33. Der Ringabschnitt 45 verläuft mit steigendem Abstand zur Drehachse 7 radial nach außen in Richtung der Oberseite 14 gebogen.

Wie Fig. 5 zeigt, ist im Innenbereich 15 eine Abschirmwand 17 vorgesehen. Die Abschirmwand 17 ist in Drehrichtung 11 des Fadenmähkopfes vorlaufend zum Fadenabschnitt angeordnet. Die Abschirmwand 17 ist benachbart zum Fadenabschnitt des Schneidfadens 8 angeordnet. Im Ausführungsbeispiel ist das Ablenkelement 22 in der Abschirmwand 17 ausgebildet. Eine Ausbildung des Ablenkelementes 22 separat von der Abschirmwand 17 ist ebenfalls möglich. In Drehrichtung 11 vorlaufend zur Abschirmwand 17 ist ein wendelförmiger Abschnitt 43 angeordnet, der durch die Dachfläche 35 gebildet ist. Der wendelförmige Abschnitt 43 erstreckt sich über mindestens etwa 30%, insbesondere mindestens etwa 50%, vorzugsweise mindestens etwa 70% des in Fig. 3 gezeigten Winkelabstands γ zwischen den Schneidfäden 8.

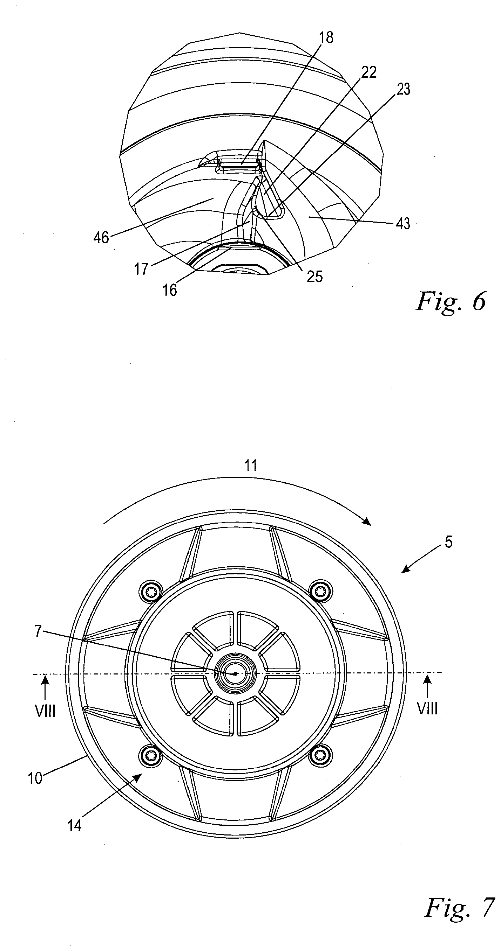

In Fig. 6 ist die Abschirmwand 17 gezeigt, die im Ausführungsbeispiel parallel und etwa radial zur Drehachse 7 verläuft und in der Dachfläche 35 eine Stufe bildet. Im Ausführungsbeispiel grenzt die Abschirmwand 17 in Drehrichtung 11 zumindest teilweise an den wendelförmigen Abschnitt 43 an. Im Ausführungsbeispiel ist an dem Ablenkelement 22 eine Auflage 23 ausgebildet. Vorteilhaft grenzt das Ablenkelement 22 an der Auflage zumindest teilweise an den wendelförmigen Abschnitt 43 an. Im Ausführungsbeispiel ist das Ablenkelement 22 als Rampe ausgebildet. In einer vorteilhaften, alternativen Ausführung kann das Ablenkelement durch einen Stift gebildet sein, wobei auch andere Gestaltungen möglich sind. Befindet sich der Schneidfaden 8, der in Fig. 6 nicht gezeigt ist, in seiner zweiten Lage 29, so liegt der Schneidfaden 8 an der Auflage 23 an. Zur Abstützung des Schneidfadens 8 quer zur zweiten Richtung 27 des Schneidfadens 8 ist an dem Ablenkelement 22 eine Sicherungskontur 25 angeordnet. Im Ausführungsbeispiel stützt die Sicherungskontur 25 den Schneidfaden 8 an der in Drehrichtung 11 nachlaufenden Seite ab. Die Sicherungskontur 25 ist als eine Erhöhung an der Auflage 23 ausgebildet und ragt in Richtung der Unterseite 13. Die Sicherungskontur 25 ist zwischen der Auflage 23 und der Abschirmwand 17 angeordnet. Setzt der Bediener den Schneidfaden 8 von seiner ersten Lage 28 in seine zweite Lage 29, dient die Sicherungskontur 25 zur Verrastung des Schneidfadens 8 in der zweiten Lage 29. Der Schneidfaden 8 wird durch die Sicherungskontur 25 gestützt und bleibt in seiner zweiten Lage 29 ohne Zutun des Bedieners. Die Sicherungskontur 25 hindert den gebogenen Fadenabschnitt daran, elastisch in die erste Lage 28 zurückzufedern. Im Ausführungsbeispiel ist die Sicherungskontur 25 als eine Nase ausgebildet. In vorteilhafter Ausführung kann die Sicherungskontur 25 auch in anderer Gestalt ausgebildet sein.

Wie Fig. 6 in Verbindung mit Fig. 3 zeigt, liegt der Schneidfaden 8 in seiner ersten Lage 28 mit dem Fadenabschnitt radial zur Drehachse 7 und benachbart zur Abschirmwand 17. Zwischen der Abschirmwand 17 und dem Fadenabschnitt ist in Umfangsrichtung zur Drehachse 7 ein schmaler Spalt gebildet. Im Ausführungsbeispiel verengt sich der Spalt zur Drehachse 7 hin. Der Fadenabschnitt verläuft in etwa parallel zur Abschirmwand 17. In Fig. 6 ist gezeigt, dass die Abschirmwand 17 bezogen auf die Drehrichtung 11 nachlaufend einen Windschatten bildet. Im Betrieb des Freischneiders 1 liegt das innere Ende 9 des Schneidfadens 8 im Windschatten des Ablenkelementes 22. Dies reduziert die Verschmutzungsneigung des Innenbereichs 15. Da der Schneidfaden 8 im Ausführungsbeispiel benachbart zur Abschirmwand 17 verläuft, ist ein Umgreifen des Fadenabschnitts in erster Lage 28 nur erschwert möglich. Der Spalt ist insbesondere schmaler als eine Fingerbreite. Die zum Abschirmelement 17 gerichtete oder den Spalt begrenzende Umfangseite des Schneidfadens 8 kann in erster Lage 28 nur erschwert gegriffen werden. Bezogen auf die Drehrichtung 11 nachlaufend zu dem Abschirmelement 17 ist die Dachfläche 35 benachbart zum Ablenkelement 22 als eine freie Fläche 46 ausgebildet. Die freie Fläche 46 liegt im Ausführungsbeispiel in etwa in einer Ebene, die senkrecht zur Drehachse 7 liegt. Die freie Fläche 46 kann auch innerhalb der ersten 45°, insbesondere innerhalb der ersten 20°, vorteilhaft am Beginn des wendelförmigen Abschnittes 43 gebildet sein und demnach spiralförmig zur Drehachse 7 verlaufen.

Der entlang der Drehachse 7 gemessene Abstand der freien Fläche 46 zur Unterseite 13 ist größer als der Abstand des Schneidfadens 8 zur Unterseite 13. Die freie Fläche 46 erstreckt sich in Umfangsrichtung zur Drehachse 7 bis über den Schneidfaden 8, insbesondere den gesamten Durchmesser d des Schneidfadens 8. In vorteilhafter Ausführung entspricht in erster Lage 28 des Schneidfadens 8 der in Richtung der Drehachse 7 gemessene Abstand zwischen dem Schneidfaden 8 und der freien Fläche 46 entlang des Schneidfadenabschnitts mindestens dem 2fachen Durchmesser d des Schneidfadens 8. Dadurch kann der Bediener seinen Finger zwischen den Schneidfaden 8 und die freie Fläche 46 schieben, um den Schneidfaden auf einfache Weise von seiner ersten Lage 28 in seine zweite Lage 29 umzusetzen. Im Ausführungsbeispiel ermöglicht die freie Fläche 46 dem Bediener die Zugänglichkeit zum Schneidfaden 8. Der Schneidfaden 8 besitzt eine der Abschirmwand 17 zugewandte vorlaufende Umfangsseite, eine der Abschirmwand 17 abgewandte nachlaufende Umfangsseite, eine der Dachfläche 35 zugewandte Oberseite und eine der Dachfläche 35 abgewandte Unterseite. Im Ausführungsbeispiel ermöglicht die freie Fläche 46 dem Bediener die Zugänglichkeit zum Schneidfaden 8 an der nachlaufenden Umfangsseite des Schneidfadens 8 und bei ausreichend großem in Richtung der Drehachse 7 gemessenem axialen Abstand zwischen Schneidfaden 8 und freier Fläche 46 auch an der Oberseite des Schneidfadens 8. Der Bediener kann den Schneidfaden 8 entlang des gesamten Fadenabschnitts über die freie Fläche 46 kontaktieren. Der Bediener kann den Schneidfaden 8 entlang des gesamten Fadenabschnitts an seiner nachlaufenden Umfangsseite durch die freie Fläche 46 kontaktieren. Der Schneidfadenquerschnitt wird L-förmig durch die freie Fläche 46 an seiner Oberseite und durch die Abschirmwand 17 an seiner vorlaufenden Umfangsseite umgeben. An seiner Unterseite und an seiner nachlaufenden Umfangsseite ist der Schneidfaden 8 frei zugänglich. Liegt der Schneidfaden 8 in seiner ersten Lage 28, kann der Bediener seinen Finger ausgehend von der freien Fläche 46 gegen den Schneidfaden 8 in Richtung des Ablenkelementes 22 drücken und dadurch den Schneidfaden 8 von seiner ersten Lage 28 in seine zweite Lage 29 auf das Ablenkelement 22 umsetzen.

In Fig. 7 ist die Oberseite 14 des Fadenmähkopfes 5 gezeigt. Der Grundkörper 10 ist zur Drehachse 7 im Raum achsensymmetrisch, in der in Fig. 7 gezeigten Draufsicht daher punktsymmetrisch, ausgebildet.

In Fig. 8 ist ein Schnitt des Fadenmähkopfes 5 entlang der Linie VIII-VIII in Fig. 7 gezeigt. In Fig. 9 ist eine perspektivische Darstellung der Fig. 8 gezeigt. In den Figuren 8 und 9 ist der Fadenkanal 36 gezeigt, der von der Öffnung 34 der Außenseite 33 bis zur Fadenöffnung 18 in der Umfangswand 38 des Innenbereichs 15 verläuft. Der Schneidfaden 8 verläuft von der Außenseite 33 durch den Fadenkanal 36 in den Innenbereich 15. Dabei ist der Schneidfaden 8 von einer im Grundkörper 10 befindlichen Klemmeinrichtung 47 gehalten. Die Klemmeinrichtung 47 verhindert eine Bewegung des Schneidfadens 8 radial nach außen. Die Klemmeinrichtung 47 ist radial zwischen der Außenseite 33 und dem Innenbereich 15 des Fadenmähkopfes 5 angeordnet. Die Klemmeinrichtung 47 besitzt eine schwenkbar gelagerte Klinke 48, die um eine Schwenkachse 49 schwenkbar ist. Die Schwenkachse 49 ist so angeordnet, dass die Klinke 48 bei einer Bewegung des Schneidfadens 8 nach innen, zur Drehachse 7 des Fadenmähkopfes 5 hin, die Klemmwirkung verringert und den Schneidfaden 8 freigibt. Die Klinke 48 ragt dabei in den Fadenkanal 36 ein. Eine Bewegung des Schneidfadens 8 radial nach außen bewirkt eine Verstärkung der Klemmwirkung der Klemmeinrichtung 47. Im möglichen Kontaktbereich der Klinke 48 mit dem Schneidfaden 8 besitzt die Klinke eine Rückhaltestruktur 50, die im Ausführungsbeispiel durch eine Zahnstruktur gebildet ist. Die Rückhaltestruktur 50 liegt an dem Schneidfaden 8 an. Der Schneidfaden 8 ist dadurch sicher von der Klemmeinrichtung 47 in dem Fadenkanal 36 gehalten. Um den Schneidfaden 8 vom Fadenmähkopf 5 zu entnehmen, kann der Schneidfaden 8 vom Bediener in einer zweiten Lage 29 des Schneidfadens 8 vollständig durch den Fadenkanal 36 in den Innenbereich 15 durchgeschoben und/oder durchgezogen werden. In der ersten Lage 28 ist die Bewegung des Schneidfadens 8 nach innen begrenzt, so dass das innere Ende 9 des Schneidfadens 8 höchstens um die Einstecklänge b in den Innenbereich 15 ragt und die Klemmeinrichtung 47 den Schneidfaden 8 klemmt. Die Einstecklänge b ist im Ausführungsbeispiel kleiner als die Länge des Fadenkanals 36.

Wie Fig. 8 zeigt, ist die Einstecklänge b bezüglich der Drehachse 7 in radialer Richtung zwischen dem Anschlag 16 und der Fadenöffnung 18 des jeweiligen Schneidfadens 8 gemessen. Der Abstand b beträgt im Ausführungsbeispiel höchstens das 10fache, insbesondere höchstens das 8fache des Durchmessers d des Schneidfadens 8. Bei einem Schneidfaden 8 mit unregelmäßigem Querschnitt ist der Durchmesser d die größte Erstreckung des Schneidfadens 8 quer zu seiner Längserstreckung. Die Fadenöffnung 18 besitzt eine untere Öffnungskante 20 und eine obere Öffnungskante 51. Die untere Öffnungskante 20 ist in der Seitenansicht in Fig. 8 unterhalb der oberen Öffnungskante 51 angeordnet. Die untere Öffnungskante 20 liegt näher an der Unterseite 13 des Fadenmähkopfes 5 als die obere Öffnungskante 51. Der parallel zur Drehachse 7 gemessene Abstand zwischen der unteren Öffnungskante 20 und der oberen Öffnungskante 51 entspricht einer Höhe g der Fadenöffnung 18. Im Ausführungsbeispiel entspricht die Einstecklänge b höchstens der 5fachen Höhe g der Fadenöffnung 18. Die Einstecklänge b zwischen der Fadenöffnung 18 und dem Anschlag 16 entspricht im Ausführungsbeispiel mindestens dem 3fachen Durchmesser d des Schneidfadens 8, in vorteilhafter Ausführung insbesondere der 3fachen Höhe g der Fadenöffnung 18.

In Fig. 8 ist auch gezeigt, dass der in axiale Richtung der Drehachse 7 gemessene Abstand a zwischen der Auflage 23 und der unteren Öffnungskante 20 kleiner, insbesondere um ein Vielfaches kleiner als die Einstecklänge b ist. Der Abstand a ist im Ausführungsbeispiel geringer als die Höhe g der Fadenöffnung 18, insbesondere geringer als der Durchmesser d des Schneidfadens 8. Der in radialer Richtung zur Drehachse 7 gemessene Abstand e zwischen der Auflage 23 und der unteren Öffnungskante 20 ist kleiner als die Einstecklänge b und beträgt insbesondere zwischen dem 1fachen Durchmesser d und dem 8fachen Durchmesser d, insbesondere dem 3fachen Durchmesser d und dem 6fachen Durchmesser d des Schneidfadens 8. Bei dem Umsetzen wird der Fadenabschnitt in Umfangsrichtung zur Drehachse 7 um einen Winkel α und/oder in axialer Richtung der Drehachse 7 um einen Winkel β gegenüber seiner ersten Lage 28 ausgelenkt oder gebogen. Die Auflage 23 hat einen minimalen Abstand zur Fadenöffnung 18, der kleiner ist als die Einstecklänge b des Schneidfadens 8. Auf diese Weise kann der Fadenabschnitt durch eine Biegung um die Fadenöffnung 18 auf die Auflage 23 umgesetzt werden. Das Umsetzen auf die Auflage 23 benötigt keine Bewegung des Schneidfadens 8 entlang seiner Längsachse nach innen. Die Auflage 23 hat vorteilhaft auch einen maximalen Abstand zur Fadenöffnung 18. Wenn die Einstecklänge b größer als der maximale Abstand ist, ragt das innere Ende 9 des Schneidfadens 8 nach dem Umsetzen vorteilhaft über die Auflage 23 und kann so noch leichter vom Bediener gegriffen werden.

Fig. 8 zeigt auch, dass der Schneidfaden 8 in seiner ersten Lage 28 einen in axialer Richtung der Drehachse 7 gemessenen minimalen Abstand c zur Unterseite 13 des Fadenmähkopfes 5 besitzt. Der minimale Abstand c entspricht dem Abstand des Punktes des Schneidfadens 8, welcher den in Richtung der Drehachse 7 gemessenen geringsten Abstand zur Unterseite 13 des Grundkörpers 10 besitzt, zur Unterseite 13. Im Ausführungsbeispiel weist die Unterkante20 der Fadenöffnung 18 ebenso den Abstand c zur Unterseite 13 des Fadenmähkopfes 5 auf. Die Länge f des in den Innenbereich 15 einschiebbaren Fadenabschnitts bemisst sich ausgehend von der Fadenöffnung 18 bis hin zur Stirnseite 37 des Schneidfadens 8 entlang einer Schneidfadenmittellinie, welche durch die Mittelpunkte der Schneidfadenquerschnitte verläuft.

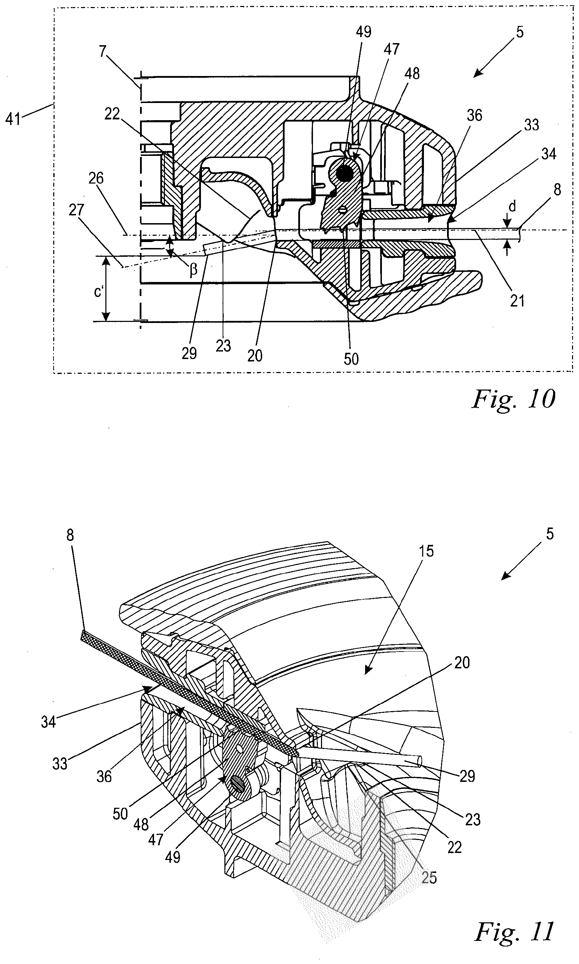

In Fig. 10 ist, wie auch in Fig. 8, ein Schnitt entlang der Linie VIII der Fig. 7 gezeigt, jedoch befindet sich der Schneidfaden 8 in seiner zweiten Lage 29. Die Fig. 11 zeigt eine perspektivische Darstellung der Fig. 10. Sowohl die Fig. 10 als auch die Fig. 11 zeigen, dass der Schneidfaden 8 in seiner zweiten Lage 29 an dem Ablenkelement 22 anliegt. Der Schneidfaden 8 steht dabei an der Fadenöffnung 18 mit der unteren Öffnungskante 20 und an dem Ablenkelement 22 mit der Auflage 23 in Kontakt. Die Öffnungskante 20 und die Auflage 23 sind dabei an gegenüberliegenden Längsseiten des Schneidfadens 8 angeordnet. Der Fadenabschnitt ist um die untere Öffnungskante 20 gebogen. Der Faden ist hierbei elastisch verformt und stützt sich an der Auflage 23 ab. Ragt der Schneidfaden 8 so weit in den Innenbereich 15, dass die Länge f des einschiebbaren Fadenabschnitts größer als der minimale Abstand, jedoch geringer als der maximale Abstand zwischen der Auflage 23 und der unteren Öffnungskante 20 ist, so liegt der Schneidfaden 8 an der Auflage 23 an. Dabei kann die Auflage 23 so gestaltet sein, dass der Schneidfaden 8 mit der Auflage 23 in mindestens einem Punkt, insbesondere in mindestens zwei Punkten in Kontakt steht. In vorteilhafter Ausführung besteht zwischen der Auflage 23 und dem Schneidfaden 8 zumindest ein Linienkontakt, insbesondere ein Flächenkontakt. Der in Richtung der Drehachse 7 gemessene minimale Abstand c' des Schneidfadens 8 zur Unterseite 13 des Fadenmähkopfes 5 in zweiter Lage 29 des Schneidfadens 8 ist geringer als der Abstand c des Schneidfadens 8 in erster Lage 28. Die Stirnseite 37 des ausgelenkten Schneidfadens 8 liegt näher an der Unterseite 13 des Fadenmähkopfes 5 als die Stirnseite 37 des nicht ausgelenkten Schneidfadens 8. In der zweiten Lage 29 ist die Verlängerung 31 des Schneidfadens 8 unmittelbar benachbart zur Nabe 24 an der Nabe 24 vorbeigeführt. Dadurch ist der Schneidfaden 8 in der zweiten Lage 29 minimal umgelenkt und verformt. Die zum Umsetzen benötigte Kraft ist dadurch minimiert.

In Fig. 10 ist auch gezeigt, dass die erste Richtung 26 und die zweite Richtung 27 des Schneidfadens 8 in einer Draufsicht auf eine die Drehachse 7 enthaltende und parallel zur Längsachse 21 der Fadenöffnung 18 verlaufende Längsebene 41 einen Winkel β von mindestens 5°, insbesondere von mindestens 10° einschließt. Vorteilhaft ist die erste Richtung 26 radial zur Drehachse 7 ausgerichtet, und die zweite Richtung 27 besitzt neben der radialen Richtung eine bezogen auf die Drehachse 7 axiale und/oder radiale Richtungskomponente. Die Längsachse 21 der Fadenöffnung 18 entspricht einer Geraden, die im Flächenschwerpunkt der von der Fadenöffnung 18 umschlossenen Fläche liegt und senkrecht zur umschlossenen Fläche ausgerichtet ist. Der Winkel β öffnet zur Drehachse 7 hin. Der Winkel β ist in vorteilhafter Ausführung mindestens so groß, dass die Verlängerung 31 des Schneidfadens 8 in seiner zweiten Richtung 27 in axialer Richtung außerhalb des Anschlages 16 liegt. Der Winkel β ist mindestens so groß, dass der Schneidfaden 8 in seiner zweiten Lage 29 über das Ablenkelement 22 an dem Anschlag 16, insbesondere an der Nabe 24 des Fadenmähkopfes 5 vom Bediener vorbeigeschoben und/oder gezogen werden kann. Mittels des Winkels β ist das Ausweichen des Schneidfadens 8 gegenüber dem Anschlag 16 in axialer Richtung zur Drehachse 7 definiert. Das Ausweichen des Schneidfadens 8 gegenüber dem Anschlag 16 in Umfangsrichtung zur Drehachse 7 ist durch den in Fig. 4 gezeigten Winkel α definiert, welcher oben in der Beschreibung der Fig. 4 ausführlich beschrieben ist. Im Ausführungsbeispiel liegt das innere Ende 9 des Schneidfadens 8 in der ersten Lage 28 mit dem Schneidfaden 8 in einer parallel zur Unterseite 13 verlaufenden Ebene. In der zweiten Lage 29 ist das innere Ende 9 zwischen dieser Ebene und der Unterseite 13 angeordnet.

## Patentansprüche

1. Fadenmähkopf für einen Freischneider, wobei der Fadenmähkopf (5) im Betrieb um eine Drehachse (7) rotierend antreibbar ist, wobei der Fadenmähkopf (5) einen Grundkörper (10) besitzt, an dem mindestens ein Schneidfaden (8) gehalten ist, wobei der Schneidfaden (8) sich von einer Außenseite (14) des Grundkörpers (10) durch eine Fadenöffnung (18) bis in einen zur Umgebung offenen Innenbereich (15) des Fadenmähkopfes (5) erstreckt, wobei am Fadenmähkopf (5) ein Anschlag (16) für den Schneidfaden (8) angeordnet ist, wobei der Anschlag (16) in einer ersten Lage (28) des Schneidfadens (8) die Länge (f) eines in den Innenbereich (15) einschiebbaren Fadenabschnitts des Schneidfadens (8) auf eine Einstecklänge (b) begrenzt,
**dadurch gekennzeichnet, dass** im Innenbereich (15) des Fadenmähkopfes (5) mindestens ein Ablenkelement (22) so angeordnet ist, dass der Schneidfaden (8) von seiner ersten Lage (28) ohne eine Verschiebung des Schneidfadens (8) in seine Längsrichtung in eine zweite Lage (29) durch Biegen des eingeschobenen Fadenabschnittes um die Fadenöffnung (18) umgesetzt werden kann, wobei der Schneidfaden (8) in seiner zweiten Lage (29) an dem Ablenkelement (22) anliegt und der Anschlag (16) die Länge (f) des in den Innenbereich (15) einschiebbaren Fadenabschnitts nicht begrenzt.

2. Fadenmähkopf nach Anspruch 1,
**dadurch gekennzeichnet, dass** in der ersten Lage (28) des Schneidfadens (8) ein inneres Ende (9) des Schneidfadens (8) in einer ersten Richtung (26) ausgerichtet ist, und der Anschlag (16) in Verlängerung (30) des inneren Endes (9) des Schneidfadens (8) in erster Richtung (26) liegt, und dass in der zweiten Lage (29) des Schneidfadens (8) das innere Ende (9) des Schneidfadens (8) in einer zweiten Richtung (27) ausgerichtet ist, wobei der Anschlag (16) außerhalb der Verlängerung (31) des inneren Endes (9) des Schneidfadens (8) in zweiter Richtung (27) liegt.

3. Fadenmähkopf nach Anspruch 2,
**dadurch gekennzeichnet, dass** das Ablenkelement (16) in Blickrichtung der Drehachse (7) gegenüber dem Schneidfaden (8) quer zur ersten Richtung (26) versetzt ist.

4. Fadenmähkopf nach einem der Ansprüche 1 bis 3,
**dadurch gekennzeichnet, dass** die Fadenöffnung (18) am Innenbereich (15) des Fadenmähkopfes (5) eine untere Öffnungskante (20) besitzt, und dass das Ablenkelement (22) eine Auflage (23) besitzt, wobei der Schneidfaden (8) in der zweiten Lage (29) sowohl an der unteren Öffnungskante (20) als auch an der Auflage (23) anliegt.

5. Fadenmähkopf nach Anspruch 4,
**dadurch gekennzeichnet, dass** der in Richtung der Drehachse (7) gemessene Abstand (a) zwischen der Auflage (23) und der unteren Öffnungskante (20) geringer ist als eine in Richtung der Drehachse (7) gemessene Höhe (g) der Fadenöffnung (18).

6. Fadenmähkopf nach einem der Ansprüche 2 bis 5,
**dadurch gekennzeichnet, dass** die erste Richtung (26) und die zweite Richtung (27) des Schneidfadens (8) in Blickrichtung der Drehachse (7) des Fadenmähkopfes (5) einen Winkel (α) von mindestens 5° einschließen.

7. Fadenmähkopf nach einem der Ansprüche 2 bis 6,
**dadurch gekennzeichnet, dass** die erste Richtung (26) und die zweite Richtung (27) des Schneidfadens (8) in einer Draufsicht auf eine die Drehachse (7) enthaltende und parallel zur Längsachse (21) der Fadenöffnung (18) verlaufende Längsebene (41) einen Winkel (β) von mindestens 5° einschließen.

8. Fadenmähkopf nach einem der Ansprüche 4 bis 7,
**dadurch gekennzeichnet, dass** die Auflage (23) des Ablenkelements (22) eine Sicherungskontur (25) zur Sicherung des Schneidfadens (8) in der zweiten Lage (29) aufweist.

9. Fadenmähkopf nach einem der Ansprüche 1 bis 8,
**dadurch gekennzeichnet, dass** der Abstand (b) zwischen der Fadenöffnung (18) und dem Anschlag (16) höchstens dem 10fachen Durchmesser (d) des Schneidfadens (8) entspricht.

10. Fadenmähkopf nach einem der Ansprüche 1 bis 9,
**dadurch gekennzeichnet, dass** der Abstand (b) zwischen der Fadenöffnung (18) und dem Anschlag (16) mindestens dem 3fachen Durchmesser (d) des Schneidfadens (8) entspricht.

11. Fadenmähkopf nach einem der Ansprüche 1 bis 10,
**dadurch gekennzeichnet, dass** im Innenbereich (15) des Fadenmähkopfes (5)in Umfangsrichtung der Drehachse (7) neben dem Schneidfaden (8) eine Abschirmwand (17) angeordnet ist.

12. Fadenmähkopf nach Anspruch 11,
**dadurch gekennzeichnet, dass** sich die Abschirmwand (17) von der Fadenöffnung (18) bis zum Anschlag (16) erstreckt.

13. Fadenmähkopf nach einem der Ansprüche 1 bis 12,
**dadurch gekennzeichnet, dass** der Grundkörper (10) eine im Betrieb dem Boden (12) zugewandte Unterseite (13) besitzt, wobei der Innenbereich (15) an der Unterseite (13) des Grundkörpers (10) zur Umgebung hin offen ist.

14. Fadenmähkopf nach Anspruch 13,
**dadurch gekennzeichnet, dass** der in Richtung der Drehachse (7) gemessene Abstand (c, c') zwischen der Unterseite (13) und dem inneren Ende (9) des Schneidfadens (8) in erster Lage (28) größer als in zweiter Lage (29) ist.

15. Fadenmähkopf nach einem der Ansprüche 1 bis 14,
**dadurch gekennzeichnet, dass** das Ablenkelement (22) als Rampe ausgebildet ist.

## Claims

1. String mower head for a string mower, wherein the string mower head (5) can be driven to rotate about an axis of rotation (7) in operation, wherein the string mower head (5) has a base body (10) on which at least one cutting string (8) is held, wherein the cutting string (8) extends from an outside (14) of the base body (10) through a string opening (18) into an inner region (15) - open to the environment - of the string mower head (5), wherein a stop (16) for the cutting string (8) is located at the string mower head (5), wherein the stop (16) limits in a first position (28) of the cutting string (8) the length (f) of a string section of the cutting string (8) which can be inserted into the inner region (15) to an insertion length (b),
**characterised in that** a deflection element (22) is arranged in the inner region (15) of the string mower head (5) in such a way that the cutting string (8) can be moved from its first position (28) into a second position (29) without displacing the cutting string (8) in its longitudinal direction by bending the inserted string section around the string opening (18), wherein the cutting string (8) contacts the deflection element (22) in its second position (29) and the stop (16) does not limit the length (f) of the string section which can be inserted into the inner region (15).

2. String mower head according to claim 1,
**characterised in that** an inner end (9) of the cutting string (8) is oriented in a first direction (26) in the first position (28) of the cutting string (8) and the stop (16) lies in extension (30) of the inner end (9) of the cutting string (8) in the first direction (26), and **in that** the inner end (9) of the cutting string (8) is oriented in a second direction (27) in the second position (29) of the cutting string (8), the stop (16) lying in the second direction (27) outside the extension (30) of the inner end (9) of the cutting string (8).

3. String mower head according to claim 2,
**characterised in that** the deflection element (22) is offset relative to the cutting string (8) transversely to the first direction (26) in the viewing direction of the axis of rotation (7).

4. String mower head according to any of claims 1 to 3,
**characterised in that** the string opening (18) has a lower opening edge (20) in the inner region (15) of the string mower head (5), and **in that** the deflection element (22) has a support (23), the cutting string (8) contacting both the lower opening edge (20) and the support (23) in the second position (29).

5. String mower head according to claim 4,
**characterised in that** the distance (a) between the support (23) and the lower opening edge (20) as measured in the direction of the axis of rotation (7) is less than a height (g) of the string opening (18) as measured in the direction of the axis of rotation (7).

6. String mower head according to any of claims 2 to 5,
**characterised in that** the first direction (26) and the second direction (27) of the cutting string (8) enclose an angle (α) of at least 5° in the viewing direction of the axis of rotation (7) of the string mower head (5).

7. String mower head according to any of claims 2 to 6,
**characterised in that** the first direction (26) and the second direction (27) of the cutting string (8) enclose an angle (β) of at least 5° in a top view onto a longitudinal plane (41) containing the axis of rotation (7) and extending parallel to the longitudinal axis (21) of the string opening (18).

8. String mower head according to any of claims 4 to 7,
**characterised in that** the support (23) of the deflection element (22) has a securing contour (25) for securing the cutting string (8) in the second position (29).

9. String mower head according to any of claims 1 to 8,
**characterised in that** the distance (b) between the string opening (18) and the stop (16) corresponds to no more than 10 times the diameter (d) of the cutting string (8).

10. String mower head according to any of claims 1 to 9,
**characterised in that** the distance (b) between the string opening (18) and the stop (16) corresponds to at least 3 times the diameter (d) of the cutting string (8).

11. String mower head according to any of claims 1 to 10,
**characterised in that** a screening wall (17) is arranged in the inner region (15) of the string mower head (5) in the circumferential direction of the axis of rotation (7) adjacent to the cutting string (8).

12. String mower head according to claim 11,
**characterised in that** the screening wall (17) extends from the string opening (18) to the stop (16).

13. String mower head according to any of claims 1 to 12,
**characterised in that** the base body (10) has an underside (13) facing the ground (12) in operation, the inner region (15) being open to the environment on the underside (13) of the base body (10).

14. String mower head according to claim 13,
**characterised in that** the distance (c, c') between the underside (13) and the inner end (9) of the cutting string (8) as measured in the direction of the axis of rotation (7) is greater in the first position (28) than in the second position (29).

15. String mower head according to any of claims 1 to 14,
**characterised in that** the deflection element (22) is designed as a ramp.

## Revendications

1. Tête faucheuse à fil pour une débroussailleuse, dans laquelle la tête faucheuse à fil (5) en fonctionnement est apte à être entraînée en rotation autour d'un axe de rotation (7), dans laquelle la tête faucheuse à fil (5) possède un corps de base (10) sur lequel est retenu au moins un fil de coupe (8), dans laquelle le fil de coupe (8) s'étend d'un côté extérieur (14) du corps de base (10) à travers une ouverture pour fil (18) jusque dans une zone intérieure (15) de la tête faucheuse à fil (5) ouverte sur l'environnement, dans laquelle une butée (16) pour le fil de coupe (8) est disposée sur la tête faucheuse à fil (5), dans laquelle la butée (16), dans une première position (28) du fil de coupe (8), limite la longueur (f) d'un tronçon de fil du fil de coupe (8) apte à être inséré dans la zone intérieure (15) à une longueur d'introduction (b),
**caractérisée en ce que** dans la zone intérieure (15) de la tête faucheuse à fil (5), au moins un élément de déviation (22) est disposé de telle sorte que le fil de coupe (8) puisse passer de sa première position (28) sans déplacement du fil de coupe (8) dans sa direction longitudinale à une deuxième position (29) par flexion du tronçon de fil inséré, autour de l'ouverture pour fil (18), dans laquelle le fil de coupe (8) dans sa deuxième position (29) est appliqué contre l'élément de déviation (22) et la butée (16) ne limite pas la longueur (f) du tronçon de fil apte à être inséré dans la zone intérieure (15).

2. Tête faucheuse à fil selon la revendication 1,
**caractérisée en ce que** dans la première position (28) du fil de coupe (8), une extrémité intérieure (9) du fil de coupe (8) est orientée dans une première direction (26), et la butée (16) se trouve dans le prolongement (30) de l'extrémité intérieure (9) du fil de coupe (8) dans la première direction (26), et **en ce que** dans la deuxième position (29) du fil de coupe (8), l'extrémité intérieure (9) du fil de coupe (8) est orientée dans une deuxième direction (27), dans laquelle la butée (16) se trouve en dehors du prolongement (31) de l'extrémité intérieure (9) du fil de coupe (8) dans la deuxième direction (27).

3. Tête faucheuse à fil selon la revendication 2,
**caractérisée en ce que** l'élément de déviation (22) dans la direction d'observation de l'axe de rotation (7) est décalé par rapport au fil de coupe (8) transversalement par rapport à la première direction (26).

4. Tête faucheuse à fil selon l'une des revendications 1 à 3,
**caractérisée en ce que** l'ouverture pour fil (18) possède sur la zone intérieure (15) de la tête faucheuse à fil (5) un bord d'ouverture inférieur (20) et **en ce que** l'élément de déviation (22) possède un appui (23), dans laquelle le fil de coupe (8) dans la deuxième position (29) est appliqué aussi bien contre le bord d'ouverture inférieur (20) que contre l'appui (23).

5. Tête faucheuse à fil selon la revendication 4,
**caractérisée en ce que** la distance (a), mesurée dans la direction de l'axe de rotation (7), entre l'appui (23) et le bord d'ouverture inférieur (20), est inférieure à une hauteur (g), mesurée dans la direction de l'axe de rotation (7), de l'ouverture pour fil (18).

6. Tête faucheuse à fil selon l'une des revendications 2 à 5,
**caractérisée en ce que** la première direction (26) et la deuxième direction (27) du fil de coupe (8) dans la direction d'observation de l'axe de rotation (7) de la tête faucheuse à fil (5) définissent un angle (α) d'au moins 5°.

7. Tête faucheuse à fil selon l'une des revendications 2 à 6,
**caractérisée en ce que** la première direction (26) et la deuxième direction (27) du fil de coupe (8), sur une vue de dessus d'un plan longitudinal (41) contenant l'axe de rotation (7) et s'étendant parallèlement à l'axe longitudinal (21) de l'ouverture pour fil (18), définissent un angle (β) d'au moins 5°.

8. Tête faucheuse à fil selon l'une des revendications 4 à 7,
**caractérisée en ce que** l'appui (23) de l'élément de déviation (22) présente un contour de blocage (25) pour bloquer le fil de coupe (8) dans la deuxième position (29).

9. Tête faucheuse à fil selon l'une des revendications 1 à 8,
**caractérisée en ce que** la distance (b) entre l'ouverture pour fil (18) et la butée (16) correspond au plus à 10 fois le diamètre (d) du fil de coupe (8).

10. Tête faucheuse à fil selon l'une des revendications 1 à 9,
**caractérisée en ce que** la distance (b) entre l'ouverture pour fil (18) et la butée (16) correspond au moins à 3 fois le diamètre (d) du fil de coupe (8).

11. Tête faucheuse à fil selon l'une des revendications 1 à 10,
**caractérisée en ce que** dans la zone intérieure (15) de la tête faucheuse à fil (5), une paroi écran (17) est disposée près du fil de coupe (8) dans la direction circonférentielle de l'axe de rotation (7).

12. Tête faucheuse à fil selon la revendication 11,
**caractérisée en ce que** la paroi écran (17) s'étend de l'ouverture pour fil (18) jusqu'à la butée (16).

13. Tête faucheuse à fil selon l'une des revendications 1 à 12,
**caractérisée en ce que** le corps de base (10) possède un côté inférieur (13) tourné en fonctionnement vers le sol (12), dans laquelle la zone intérieure (15) est ouverte vers l'environnement sur le côté inférieur (13) du corps de base (10).

14. Tête faucheuse à fil selon la revendication 13,
**caractérisée en ce que** la distance (c, c'), mesurée dans la direction de l'axe de rotation (7), entre le côté inférieur (13) et l'extrémité intérieure (9) du fil de coupe (8) est plus grande dans la première position (28) que dans la deuxième position (29).

15. Tête faucheuse à fil selon l'une des revendications 1 à 14,
**caractérisée en ce que** l'élément de déviation (22) est formé comme une rampe.
